# FASCICULE DE BREVET EUROPEEN

(11) **EP 1 574 000 B1**
(45) Date de publication et mention de la délivrance du brevet: **20.03.2013**
(21) Numéro de dépôt: 03748200.7
(22) Date de dépôt: 04.07.2003
(51) Int. Cl.: H04L 29/06

(54) **Procédé de reconnaissance et d'analyse de protocoles dans des réseaux de données**
Verfahren zur Protokollerkennung und Analyse in Datennetzwerken
Method for protocol recognition and analysis in data networks

(30) Priorité: 29.07.2002 FR 0209599
(43) Date de publication de la demande: 14.09.2005
(73) Titulaire: Qosmos, 75017 Paris (FR)
(72) Inventeur: FDIDA, Serge, F.94140 Alfortville (FR); HARMEL, Gautier, F-75014 Paris (FR); HORLAIT, Eric, F-80090 Amiens (FR); PUJOLLE, Guy, F-82320 Chatillon (FR); TOLLET, Jérôme, F-75003 Paris (FR)
(74) Mandataire: Cabinet Plasseraud
(86) Numéro de dépôt international: PCT/FR2003/002075
(87) Numéro de publication internationale: WO 2004/017595

(56) Documents cités:
- WO-A-01/01272
- WO-A-01/22686
- US-A- 5 793 954
- US-A- 5 802 065

## Description

Une classification de trafics circulant sur un réseau de données, permet de décider de comportements à adopter pour chaque trafic en fonction de sa classification.

Par exemple dans un pare-feu (firewall en anglais), une mise en place de système de sécurisation repose généralement sur une reconnaissance de propriétés protocolaires pour empêcher certains transferts.

Par exemple encore, des équipements de gestion de la qualité de service, attribuent des priorités à des données en fonction de règles complexes qui décrivent des scénarios. Une correspondance entre ces scénarios et des paquets de données véhiculés au sein de connexions, utilise des techniques de classification de ces connexions.

Par exemple encore, des équipements de surveillance de réseau (monitoring) réalisent des statistiques pour mesurer et contrôler l'état du réseau en un point particulier. Ceci nécessite une classification et une reconnaissance des différents flux qui transitent par ce point.

Par exemple encore, une classification de différents flux, est utile pour facturer des services car les coûts varient selon que ces services sont de type audio, vidéo, messagerie électronique ou interrogation de base de données. D'autre part, il est souvent indispensable d'identifier correctement les utilisateurs de ces services pour en garantir la facturation.

Les opérations de contrôle et de gestion des réseaux, nécessitent ainsi une classification de connexions entre différents émetteurs et récepteurs qui génèrent des flux de données numériques sur ces réseaux. Il convient alors de disposer de procédés performants et fiables de classification.

Selon l'état connu de la technique, une tâche d'observation de paquets de données, est affectée à un noeud du réseau tel que par exemple un serveur délégué (proxy server en anglais) par lequel passent des connexions qui génèrent ces paquets de données.

La demande de brevet WO 0101272, divulgue une méthode et un appareil pour surveillance de trafic dans un réseau. Des techniques de reconnaissance de motifs (pattern matching en anglais) appliquées sur des champs prédéterminés de paquets de données analysés permet d'identifier un protocole qui succède à un protocole précédemment identifié dans une pile protocolaire de connexion, à condition que le protocole précédemment identifié permette de déterminer les champs et les motifs ou valeurs à y reconnaitre pour identifier le ou les protocoles suivants. La méthode et l'appareil précités permettent d'identifier les seuls protocoles explicites. En outre, le processus de reconnaissance de motifs mis en jeu est exécuté sur un arbre protocolaire de type hiérarchique, sans retour arrière possible vers les motifs de protocole déjà analysés.

Parmi de tels protocoles explicites, on trouve le protocole éthernet pour lequel l'entête des paquets spécifie si le protocole suivant dans le pile protocolaire est par exemple le protocole LLC ou le protocole IP avec éventuellement sa version. De même l'entête des paquets sous protocole IP, spécifie si le protocole suivant dans la pile protocolaire est par exemple le protocole TCP, UDP ou ICMP.

Un problème qui se pose, est celui de la reconnaissance des protocoles implicites. Un protocole est dit implicite lorsqu'il n'est pas explicitement identifiable de façon certaine par une entête de protocole qui le précède dans la pile protocolaire. C'est le cas de nombreux protocoles de niveau applicatif tels que Pointcast ou Kazaa dont une utilisation dans la pile protocolaire d'une connexion dépend du contexte de la connexion généralement établi par des négociations préalables, difficilement compilables avec une scrutation en temps réel au fil de l'eau, des paquets circulants au sein de la connexion.

Certains protocoles connus tels que les protocoles HTTP, Telnet, FTP, sont aujourd'hui à la limite des protocoles explicites et implicites. Ces protocoles peuvent être considérés comme explicites lorsqu'un numéro de port réservé figurant dans une entête de protocole TCP, donne un indicateur de destination qui permet d'identifier de façon certaine le protocole qui est transporté, par exemple un numéro 80 correspondant au protocole HTTP, un numéro 23 correspondant au protocole Telnet, un numéro 21 correspondant au protocole FTP. Un poste client utilise par exemple sous TCP, le numéro de port 80 pour établir une connexion de requête HTTP avec un poste serveur en allouant un numéro de port dynamique à une connexion paire qui permet au poste serveur de répondre au poste client. On remarque déjà ici que le caractère explicite du protocole HTTP sur la connexion paire pour véhiculer les réponses du poste serveur au poste client, est amoindri par l'allocation dynamique de numéro de port, lié au contexte de la connexion de requête. De plus, rien n'empêche aujourd'hui un poste client de négocier préalablement avec le poste serveur, un numéro de port distinct du numéro 80 pour la connexion de requête HTTP. Dans ce cas, le protocole HTTP est plus implicite qu'explicite. Ceci reste vrai pour d'autres protocoles. D'autre part, une connexion de requête sous le protocole FTP, engendre de façon connue d'autres connexions dynamiques pour le transfert effectif des fichiers, la connexion de requête et sa connexion paire étant utilisée pour les transferts de commande. Au sein de la ou des connexions dynamiques engendrées, les numéros de port ne permettent pas de reconnaître explicitement le protocole FTP. Une application de filtres au champ du numéro de port sous TCP, ne permet pas d'identifier le protocole transporté de façon certaine.

Un autre problème qui se pose, est celui de la reconnaissance de protocoles dont la mise en oeuvre varie tant par l'architecture de leur utilisation que par la création incessante de nouveaux protocoles.

On connaît par exemple une architecture classique d'utilisation du protocole Telnet par mise en pile de la suite ordonnée de protocoles éthernet, IP, TCP, Telnet. D'autres architectures sont possibles par mise en pile de la suite ordonnée de protocoles éthernet, IP, TCP, HTTP, Telnet ou encore éthernet, IP, IP, TCP, HTTP, Telnet pour gérer l'itinérance.

Les systèmes de l'état connu de la technique, s'adaptent difficilement à des modifications d'architecture protocolaires par modification de liens de dépendance entre protocoles existants ou nouveaux lorsque ces systèmes se basent sur des reconnaissances de motifs dans des champs déterminés par ces liens de dépendance pour identifier des protocoles utilisés. Cet inconvénient est particulièrement notable dans les systèmes matériels pour lesquels toute confrontation à des connexions établies selon une architecture protocolaire non prévue, nécessite une reconstruction sous peine d'inefficacité.

L'invention a pour objet un procédé pour classifier au moyen d'un système informatique tel que défini dans la revendication 1. Des modes de réalisation particuliers de ce procédé sont définis dans les revendications 1 à 9.

Les mécanismes auto-identificateurs associés aux noms de protocoles utilisables et les listes de protocoles utilisables associées chacune à un protocole utilisable offrent une modularité qui permet d'adapter le procédé à toute modification d'architecture. Lorsqu'il existe une architecture créant un nouveau lien de dépendance possible entre protocole père et protocole fils, il suffit d'ajouter le nom de protocole fils dans la liste associée au nom de protocole père. Lorsqu'il existe un nouveau protocole utilisable, il suffit d'ajouter dans le système, un nouveau mécanisme auto-identificateur associé au nom du nouveau protocole utilisable. Une classification de connexion peut alors se faire par construction progressive d'une suite ordonnée de protocoles utilisés dont à chaque étape, le dernier protocole constitue un protocole père. La classification est terminée lorsqu'il n'est plus possible de trouver de protocole fils utilisé pour un protocole père qui est le dernier des protocoles de la suite ordonnée.

Avantageusement pour chercher un nom de protocole fils dont la nature est implicite, le noyau informatique soumet l'information véhiculée à chaque mécanisme auto-identificateur associé à un nom de la liste de noms de protocoles fils jusqu'à ce que l'un des mécanismes auto-identificateur déclare reconnaître des informations déterminantes ou jusqu'à ce qu'aucun mécanisme auto-identificateur ne puisse déclarer reconnaître des informations déterminantes.

Disposant des règles de langage du protocole fils auquel il est associé, le mécanisme auto-identificateur peut facilement vérifier si les informations soumises appartiennent à ce langage.

Avantageusement aussi pour chercher un nom de protocole fils dont la nature est explicite, le noyau informatique soumet l'information véhiculée au mécanisme auto-identificateur associé au dernier nom de ladite suite ordonnée, de façon à ce que ce mécanisme auto-identificateur trouve le nom du protocole fils parmi les informations déterminantes du protocole père.

Disposant des règles de langage du protocole père auquel il est associé, le mécanisme auto-identificateur peut facilement trouver parmi les informations soumises, celles qui spécifient le protocole fils.

Lorsque la suite ordonnée est complétée jusqu'au niveau applicatif, la connexion à laquelle elle est associée, est classifiée par type de niveau applicatif. Ceci permet par exemple à un pare-feu de bloquer toute connexion de type transfert de fichier ou à un gestionnaire de réseau de mesurer un volume de connexions de type navigation sur la toile (WWW pour World Wide Web en anglais).

De façon particulière, le noyau informatique élabore une signature courante pour chaque connexion détectée, en soumettant tout ou partie de l'information véhiculée à au moins un mécanisme auto-identificateur associé à l'un des noms de rang faible dans ladite suite ordonnée, de façon à ce que ce mécanisme auto-identificateur trouve parmi les informations déterminantes, des indicateurs de source et de destination, incorporés dans ladite signature courante par le noyau informatique.

Dans la suite ordonnée qui constitue une image de pile protocolaire, les rangs faibles correspondent généralement aux couches de niveaux physique, réseau et transport. La signature permet de distinguer chaque connexion. Une telle distinction parmi des connexions de même type applicatif, permet par exemple à un pare-feu de bloquer toute connexion de type transfert de fichier depuis ou à destination d'un équipement informatique particulier. Ceci permet par exemple encore à un gestionnaire de réseau de mesurer un volume de connexions de type navigation sur la toile initié par un équipement client ou à destination d'un équipement serveur particulier.

De façon plus particulière, le noyau informatique répertorie chaque première structure de données dans une première table en établissant une première correspondance associative entre chaque première structure de données et la signature courante élaborée pour la connexion associée.

L'effet technique supplémentaire procuré par la signature, est alors celui de permettre au noyau informatique de se référer à une même connexion pendant la construction de la structure de donnée lorsque les informations véhiculées sont disparates sans être regroupées par un mécanisme accessoire.

Des connexions distinctes peuvent en fait appartenir à un même flot sémantique. C'est par exemple le cas des connexions paires et ou des connexions dynamiques.

De façon particulièrement avantageuse, le noyau informatique établit dans ladite première table une deuxième correspondance associative entre chaque signature courante et une signature paire dont les indicateurs de source sont les indicateurs de destination de la signature courante et dont les indicateurs de destination sont les indicateurs de source de la signature courante.

De façon particulièrement avantageuse aussi:
- le noyau informatique parcourt les noms de protocoles utilisés de la suite ordonnée dans la structure de donnée qu'il construit pour détecter chaque nom de protocole à connexion dynamique,
- pour chaque nom de protocole à connexion dynamique détecté, le noyau informatique soumet les informations véhiculées au mécanisme auto-identificateur associé au nom détecté de façon à déterminer s'il existe une connexion dynamique ultérieure et si une connexion ultérieure existe, à lui associer une deuxième structure de données agencée pour contenir une suite ordonnée de noms de protocoles potentiels qui débute avec le nom de protocole dit de base.

La deuxième correspondance associative et ou la deuxième structure de données permettent de renseigner des connexions d'un même flot sémantique avant même de les détecter puis de compléter la classification de plusieurs connexions d'un même flot sémantique à partir des informations véhiculées dans l'une des connexions détectées de ce même flot sémantique.

De façon plus particulièrement avantageuse, le noyau informatique répertorie chaque deuxième structure de données dans une deuxième table en établissant une correspondance associative entre chaque deuxième structure de données et une signature potentielle élaborée par le mécanisme auto-identificateur associé au nom détecté.

De façon plus particulièrement avantageuse encore, le noyau informatique construit en outre la première structure de données:
- en cherchant les suites ordonnées de noms de protocoles potentiels dans lesquelles est incluse la suite ordonnée de noms de protocoles utilisés et,
- lorsqu'il existe une suite ordonnée de noms de protocoles potentiels dont la signature potentielle correspond à la signature courante, en complétant la première structure de données au moyen de la deuxième structure de donnée.

De façon à être exécuté en temps réel pour permettre une meilleure réactivité d'autres systèmes qui utilisent les classifications produites et ou à réduire un volume nécessaire de ressources mémoires du système informatique qui exécute le procédé, le procédé pour classifier des connexions est amélioré en ce que:
- le noyau informatique récolte dans des paquets de données passant par le système informatique au sein de connexions à détecter, les informations véhiculées utiles pour élaborer une signature de façon à élaborer la signature courante chaque fois que les informations véhiculées utiles sont suffisantes,
- le noyau informatique utilise la signature courante ainsi élaborée en temps réel pour détecter une connexion, de façon à chercher dans ladite première table, la première structure de données qui correspond à la signature courante, à associer une nouvelle première structure de données à la connexion détectée lorsqu'il n'existe aucune première structure de données qui correspond à la signature courante et à commencer ou continuer à construire la première structure de données lorsqu'il existe une première structure de données qui correspond à la signature courante, en récoltant dans les paquets de données, les informations véhiculées utiles pour construire de première structure de données.

En cas de fragmentation de paquets de grande taille en paquets de plus petite taille, il peut arriver que les informations utiles récoltées dans un paquet de données, ne sont pas suffisantes pour élaborer une signature.

Selon une amélioration supplémentaire du procédé, le noyau informatique répertorie les informations utiles dans une deuxième table en établissant une correspondance associative entre les informations utiles qui comprennent alors des liens d'appartenance à une même connexion, jusqu'à ce que les informations utiles soient suffisantes pour élaborer la signature courante.

L'invention sera mieux comprise à la lecture de la description d'un exemple de mise en oeuvre préférée qui suit en référence aux dessins annexés dans lesquels:
- la figure 1 montre une représentation possible en mémoire d'un graphe protocolaire,
- les figures 2 et 3 sont des organigrammes du procédé conforme à l'invention.

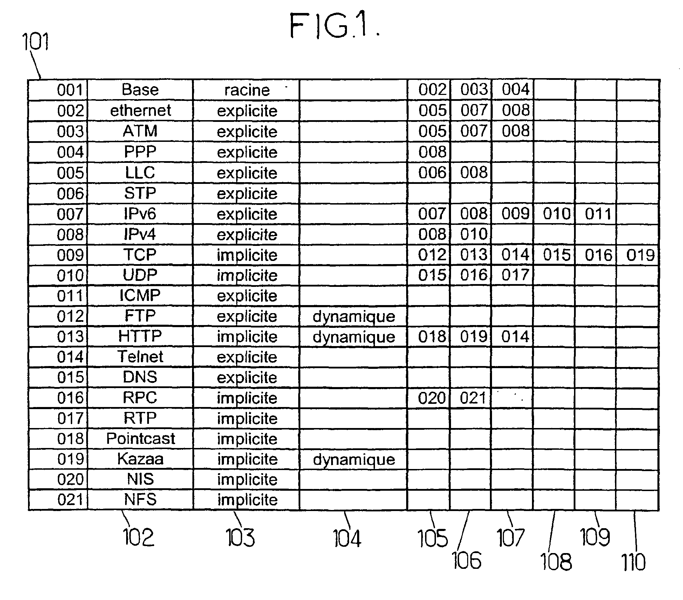

En référence à la figure 1, un tableau 101 contient dans une colonne 102 un nom de protocole utilisable sur chaque ligne repérée 001 à 021 sans que le nombre de lignes soit limitatif. Sur la ligne correspondante, une liste est associée à chaque nom de protocole utilisable de la colonne 102, dit alors protocole père. Dans les colonnes 105 à 110 sans que le nombre de colonnes soit limitatif, chaque liste est ici établie par des pointeurs vers des lignes du tableau dont le nom de protocole figurant en colonne 102 est alors dit protocole fils.

Par exemple la ligne repérée 001 contient le nom Base qui identifie un protocole dit de base qui par exception, n'est pas réellement un protocole utilisable par les connexions mais plutôt un protocole racine utilisable pour démarrer un parcours de graphe protocolaire constitué d'une concaténation de proche en proche de toutes les listes de protocoles fils. La liste de noms de protocoles fils, associée au nom Base, contient ici les noms de protocoles ethernet, ATM, PPP qui sont des protocoles de couche physique, les premiers à être effectivement utilisables pour des connexions. Ainsi, le pointeur en colonne 105 pointe sur la ligne 002, le pointeur en colonne 106 pointe sur la ligne 003, le pointeur en colonne 107 pointe sur la ligne 004.

En ligne repérée 002, la liste de noms de protocoles fils, associée au nom ethernet, contient les noms de protocoles LLC, Ipv6, Ipv4 pointés chacun respectivement en ligne 005, 007, 008 par les pointeurs situés respectivement en colonne 105, 106, 107.

En ligne repérée 005, la liste de noms de protocoles fils, associée au nom LLC, contient les noms de protocoles STP, Ipv4 pointés chacun respectivement en ligne 006, 008, par les pointeurs situés respectivement en colonne 105, 106.

En ligne repérée 006, la liste de noms de protocoles fils, associée au nom STP, est vide. Le nom de protocole STP est sur une feuille du graphe protocolaire, c'est à dire qu'il n'existe pas de protocole fils pour ce protocole père.

En ligne repérée 007, la liste de noms de protocoles fils, associée au nom Ipv6, contient les noms de protocoles Ipv6, Ipv4, TCP, UDP et ICMP pointés chacun respectivement en ligne 007, 008, 009, 010, 011 par les pointeurs situés respectivement en colonne 105, 106, 107, 108, 109. On remarque que le nom Ipv6 est à la fois nom de protocole père et nom de protocole fils. Ceci matérialise une possibilité de mettre une couche réseau au dessus d'une couche réseau de protocole identique pour gérer l'itinérance de façon connue en créant un tunnel de réseau. Une couche réseau de protocole différent peut aussi être mise au dessus d'une couche réseau pour gérer des différences de compatibilité entre réseaux, par exemple un réseau compatible Ipv4 sur lequel faire passer des connexions Ipv6.

La colonne 103 contient pour chaque nom de protocole, un indicateur qui indique si le protocole est explicite ou implicite, c'est à dire si le protocole en tant que protocole fils, est spécifié par le protocole père ou non. Par exception, l'indicateur en ligne 103 indique que le protocole nommé Base est de type racine car il n'a pas de protocole père.

La colonne 104 contient pour chaque nom de protocole, un autre indicateur qui indique si le protocole est susceptible de générer des connexions dynamiques. C'est par exemple le cas du protocole FTP en ligne 012 ou du protocole http en ligne 013.

A chaque nom de protocole utilisable figurant en colonne 102, est associé un mécanisme auto-identificateur. Chaque mécanisme auto-identificateur est agencé pour être activé par un noyau informatique au moyen du nom de protocole auquel il est associé. Chaque mécanisme auto-identificateur comprend des filtres qui de façon préférée, sont agencés sous forme de règles conformes au langage du protocole au nom duquel le mécanisme auto-identificateur est associé. Au moyen d'un moteur d'inférence, le mécanisme auto-identificateur est agencé pour rechercher dans un paquet de données qui lui sont soumises par le noyau informatique, celles qui satisfont des règles pour répondre à une demande du noyau informatique. De façon connue, une règle comprend une partie prémisse et une partie action qui génère une réponse lorsque la règle est activée et que la partie prémisse est validée. Le moteur d'inférence du mécanisme auto-identificateur, est agencé pour valider progressivement une prémisse de règle au fur et à mesure de soumissions successive de paquets de données par le noyau informatique, de façon à ce que la partie action puisse générer à chaque soumission, une réponse de type négative, probable ou positive selon respectivement l'invalidation ou la validation partielle ou totale de la partie prémisse.

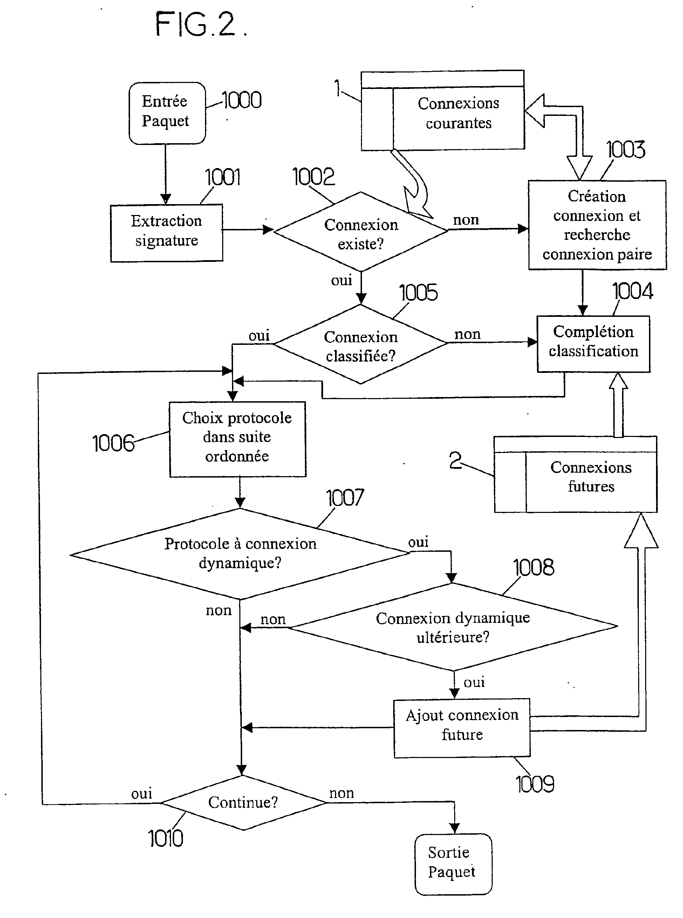

En référence à la figure 2, le procédé est activé dans une étape 1000 pour chaque paquet de données que le système informatique dévie du réseau au niveau physique. Au niveau physique, toutes les connexions à détecter passent physiquement par un coupleur du système informatique par exemple de type éthernet (normes IEEE 802), de type ATM (Asynchronous Transfer Mode), de type PPP (Point to Point Protocol) ou de tout autre type de niveau physique. A ce niveau, le système informatique dispose d'une chaîne de bits qui constitue physiqument le paquet.

Dans une étape 1001, le noyau informatique extrait une signature du paquet en soumettant le contenu du paquet à un mécanisme auto-identificateur associé au protocole utilisé par le coupleur physique qui reçoit le paquet. Le noyau informatique demande au mécanisme auto-identificateur de lui retourner un indicateur de source, un indicateur de destination et un nom de protocole transporté. Le mécanisme auto-identificateur dispose de filtres agencés pour reconnaître dans le paquet les indicateurs de source et de destination, par exemple adresses MAC dans le cas de coupleur physique de type Ethernet, identificateurs de circuit virtuel (VCI pour Virtual Circuit Identifier en anglais) et de chemin virtuel(VPI pour Virtual Path Identifier en anglais) dans le cas de coupleur physique de type ATM, numéros de téléphone appelant et appelé dans le cas de coupleur physique de type PPP. On notera qu'au niveau physique, l'indicateur de destination est celui qui correspond à l'adresse physique du coupleur du système informatique. Un protocole de couche physique étant généralement de nature explicite, le mécanisme auto-identificateur dispose aussi de filtres agencés pour reconnaître le protocole transporté.

Recevant du mécanisme auto-identificateur les indicateurs de source et de destination, le noyau informatique génère une signature de niveau physique qui contient les identificateurs de source et de destination.

Au moyen du nom de protocole transporté qui est retourné par le mécanisme auto-identificateur de niveau physique, le noyau informatique soumet les données du paquet au mécanisme auto-identificateur associé et lui demande de lui retourner un indicateur de source, un indicateur de destination et si possible un nom de protocole transporté. Le mécanisme auto-identificateur dispose de filtres agencés pour reconnaître dans le paquet les indicateurs de source et de destination, par exemple adresses IP dans le cas de protocole IP. Un protocole de couche réseau étant généralement de nature explicite, le mécanisme auto-identificateur dispose aussi de filtres agencés pour reconnaître le protocole transporté.

Recevant du mécanisme auto-identificateur les indicateurs de source et de destination, le noyau informatique génère une signature de niveau réseau qui contient les identificateurs de source et de destination.

Au moyen du nom de protocole transporté qui est retourné par le mécanisme auto-identificateur de niveau réseau, le noyau informatique soumet les données du paquet au mécanisme auto-identificateur associé pour générer comme précédemment, une signature de niveau correspondant et répéter les opérations précédemment décrites jusqu'à ce qu'un mécanisme auto-identificateur signale qu'il ne peut pas donner de nom de protocole transporté.

Le noyau informatique concatène les signatures générées pour chaque niveau de façon à obtenir une signature globale qui est spécifique d'une connexion au sein de laquelle le paquet est véhiculé.

Certains protocoles mettent en oeuvre de la fragmentation, c'est à dire divisent un paquet en plusieurs paquets de taille compatible avec les protocoles de couche inférieure. C'est par exemple le cas lorsqu'un protocole de plus haut niveau manipule des paquets de taille supérieure à la taille maximale des données pouvant être contenues dans une trame physique (MTU pour Maximum Transfer Unit en anglais). On rappelle que dans les fragments d'un même paquet, l'entête originale n'est pas intégralement reproduite sur tous les fragments. Ainsi, lorsqu'un paquet qui se présente, ne constitue en fait qu'un fragment de paquet, il ne contient pas nécessairement toutes les informations permettant de générer la signature spécifique à une connexion. Par exemple dans le cas du protocole UDP au dessus d'IP, un fragment UDP peut se présenter sans qu'il ne contienne l'entête UDP, notamment les ports source et destination qui permettent un calcul de signature.

Chaque mécanisme auto-identificateur associé à un nom de protocole susceptible de mettre en oeuvre de la fragmentation, dispose d'au moins un filtre agencé pour reconnaître une indication de taille de paquet complet supérieure à une taille de paquet courant et ou pour reconnaître un identifiant de restitution de paquet complet. L'identifiant de restitution est généralement un numéro d'ordre attribué par la source à chaque fragment de paquet. Le mécanisme auto-identificateur signale alors la fragmentation au noyau informatique et l'identifiant de restitution. Le noyau informatique utilise une table associative qui fait correspondre à chaque signature calculable jusqu'au niveau de fragmentation, la signature globale pour le paquet complet. Ainsi, lorsque se présente un paquet ou fragment de paquet qui satisfait les conditions de la table associative, le noyau informatique associe directement à ce paquet ou fragment de paquet, la signature globale correspondante.

Le noyau informatique utilise ensuite dans cette mise en oeuvre du procédé, la signature extraite en étape 1001 pour construire une première structure de données pour la connexion détectée par la présentation de paquet en étape 1000.

Dans une étape 1002, le noyau informatique cherche dans une table associative 1 des connexions courantes s'il existe une correspondance avec la signature globale extraite en étape 1001. De façon à faciliter la recherche, le noyau informatique applique à la signature globale, une fonction de hachage pour calculer une clé de hachage qui référence de façon univoque une ligne de la table associative 1 de manière connue au moyen d'une table de hachage.

Si le noyau informatique trouve une correspondance dans la table associative 1, il active une étape 1005, sinon il active une étape 1003. Ainsi, le noyau informatique vérifie en étape 1002 si le paquet dont la signature est extraite, appartient à une connexion existante déjà répertoriée dans la table associative des connexions courantes.

Dans l'étape 1003, le noyau informatique crée une ligne dans la table associative 1 en établissant une correspondance de la connexion détectée avec la signature globale extraite en étape 1001. Pour la connexion détectée, le noyau informatique initialise dans la ligne créée, la première structure de donnée avec une suite ordonnée de noms de protocoles utilisés qui commence par le protocole nommé Base. La première structure de données comprend aussi une chaîne de variables binaires attribuées chacune à une colonne de tableau 101 à partir de la colonne 105. Pour initialiser cette chaîne de variables binaires, le noyau informatique lit chaque cellule du tableau 101 qui se trouve à l'intersection d'une colonne à partir de la colonne 105 et de la ligne du tableau 101 qui contient en colonne 102, le dernier nom de protocole de la suite ordonnée. Pour une cellule non vide, le noyau informatique positionne à 1 la variable binaire de rang correspondant pour indiquer une probabilité non nulle d'utilisation de nom de protocole référencé par cette cellule. Pour une cellule vide, le noyau informatique positionne à 0 la variable binaire de rang correspondant pour indiquer une probabilité nulle d'utilisation de nom de protocole référencé par cette cellule. Simultanément, le noyau informatique calcule une signature de connexion paire de façon à ce que chaque indicateur de source de la signature de connexion paire soit l'indicateur de destination de niveau correspondant qui figure dans la signature globale et de façon à ce que chaque indicateur de destination de la signature de connexion paire soit l'indicateur de source de niveau correspondant qui figure dans la signature globale. Le noyau informatique cherche ensuite dans la table associative 1 s'il existe une correspondance avec la signature de connexion paire.

Si le noyau informatique trouve dans la table associative 1, une correspondance avec la signature de connexion paire, il établit une référence croisée entre la ligne qui contient une correspondance avec la signature globale courante et la ligne qui contient une correspondance avec la signature de connexion paire. Si le noyau informatique ne trouve pas dans la table associative 1, une correspondance avec la signature de connexion paire, il crée une ligne dans la table associative 1 en établissant une correspondance de connexion paire avec la signature de connexion paire puis le noyau informatique établit une référence croisée entre la ligne qui contient la correspondance avec la signature globale courante et la ligne qui contient la correspondance avec la signature de connexion paire.

A la suite de l'étape 1003, le noyau informatique active une étape 1004.

Dans l'étape 1005, le noyau informatique regarde dans la ligne de la table associative 1 qui contient une correspondance de connexion détectée avec la signature globale, si la connexion est marquée avec un état classifié.

Si la connexion détectée est marquée avec un état classifié, le noyau informatique active une étape 1006, sinon, le noyau informatique active l'étape 1004.

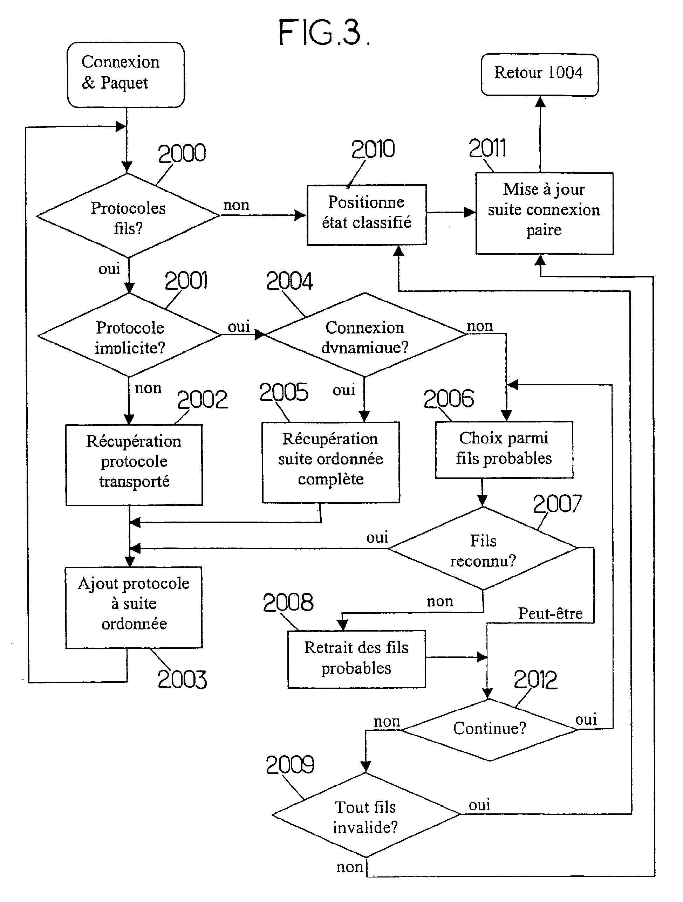

Dans l'étape 1004, le noyau informatique continue à construire la première structure de données en exécutant les étapes maintenant décrites en référence à la figure 3.

Dans une étape 2000, le noyau informatique pointe d'une part sur la ligne de la table associative 1 qui a été trouvée en étape 1002 ou créée en étape 1003 et d'autre part sur le paquet reçu en étape 1000. Le noyau informatique lit en tant que nom de protocole père, le nom de protocole utilisé qui se trouve à la fin de la suite ordonnée de protocoles utilisés de la ligne pointée.

Le noyau informatique cherche dans la première structure de données si la chaîne de variables binaires contient une variable binaire de valeur non nulle. Si toutes les variables binaires sont nulles, le noyau informatique active une étape 2010. S'il existe au moins une variable binaire non nulle, le noyau informatique active une étape 2001.

Dans l'étape 2001, le noyau informatique regarde dans la colonne 103 du tableau 101 si le protocole père est de type implicite. Si le protocole père est de type implicite, le noyau informatique active une étape 2004. Sinon, c'est à dire si le protocole père est de type explicite, le noyau informatique active une étape 2002.

Dans l'étape 2002, le noyau informatique transmet le contenu du paquet au mécanisme auto-identificateur associé au nom de protocole père et demande au mécanisme auto-identificateur de lui retourner le nom de protocole fils. Le mécanisme auto-identificateur du protocole père applique aux données contenues dans le paquet soumis, les règles de reconnaissance du protocole fils et retourne au noyau informatique, une réponse contenant le nom de protocole fils si les données sont suffisantes pour valider l'intégralité des prémisses ou retourne une réponse d'attente de données complémentaires si les données sont insuffisantes pour valider l'intégralité des prémisses.

A réception de la réponse du mécanisme auto-identificateur, le noyau informatique termine l'étape 1004 si la réponse est de type attente de données complémentaires. Si la réponse contient le nom de protocole fils, le noyau informatique active une étape 2003.

Dans l'étape 2003, le noyau informatique ajoute le nom de protocole fils dans la suite ordonnée de noms de protocoles utilisés et réactive l'étape 2000 pour laquelle le dernier nom de protocole fils ajouté en étape 2003 constitue alors un nom de protocole père. Comme décrit précédemment, la première structure de données comprend une chaîne de variables binaires attribuées chacune à une colonne de tableau 101 à partir de la colonne 105. Avant de réactiver l'étape 2000, le noyau informatique lit chaque cellule du tableau 101 qui se trouve à l'intersection d'une colonne à partir de la colonne 105 et de la ligne du tableau 101 qui contient en colonne 102, le dernier nom de protocole de la suite ordonnée. Pour une cellule non vide, le noyau informatique positionne à 1 la variable binaire de rang correspondant pour indiquer une probabilité non nulle d'utilisation de nom de protocole référencé par cette cellule. Pour une cellule vide, le noyau informatique positionne à 0 la variable binaire de rang correspondant pour indiquer une probabilité nulle d'utilisation de nom de protocole référencé par cette cellule.

Comme décrit précédemment, l'étape 2004 est activée si le protocole père est de type implicite, c'est à dire qu'il n'identifie pas de façon certaine le protocole transporté. Dans l'étape 2004, le noyau informatique cherche dans une deuxième table associative 2, s'il existe une correspondance entre la signature courante et une deuxième suite ordonnée de noms de protocoles qui contient la première suite ordonnée de noms de protocoles qui est celle répertoriée dans la première table associative 1. Si le noyau informatique trouve une telle deuxième suite ordonnée dans la table 2, il active une étape 2005. Sinon, le noyau informatique active une étape 2006.

Dans l'étape 2005, le noyau informatique récupère dans la deuxième suite ordonnée, le ou les noms de protocole qui succèdent au nom de protocole père en en conservant l'ordre. Le noyau informatique supprime ensuite la deuxième suite ordonnée dans la table associative 2 puis active l'étape 2003.

Dans l'étape 2003, le noyau informatique ajoute le nom de protocole fils ou les noms de protocole fils dans la première suite ordonnée de noms de protocoles utilisés en conservant leur ordre. Avant de réactiver l'étape 2000, le noyau informatique positionne les variables de la chaîne de variables binaires pour le dernier nom de protocole ajouté dans la suite ordonnée de noms de protocoles utilisés.

Dans l'étape 2006, le noyau informatique lit successivement une variable non nulle de la chaîne de variables binaires dans la première structure de données, en commençant par la première variable binaire non nulle. De la cellule du tableau 101 avec un rang correspondant à la variable binaire non nulle, le noyau informatique déduit un nom de protocole fils dit probable. Le noyau informatique soumet le paquet de données au mécanisme auto-identificateur associé au nom de protocole fils probable en demandant au mécanisme auto-identificateur si le paquet qui lui est soumis, lui permet d'identifier de façon certaine que le protocole fils est un protocole utilisé. A réception de la réponse du mécanisme auto-identificateur, le noyau informatique active une étape 2007.

Dans l'étape 2007, le noyau informatique active l'étape 2003 si mécanisme auto-identificateur répond que le protocole fils est utilisé, le noyau informatique active une étape 2008 si mécanisme auto-identificateur répond que le protocole fils n'est pas utilisé, le noyau informatique active une étape 2012 si mécanisme auto-identificateur répond que le protocole fils est peut-être utilisé.

Dans l'étape 2008, le noyau informatique positionne la variable binaire courante à 0 pour indiquer que le nom de protocole fils n'est pas celui d'un protocole utilisé. Le noyau informatique active ensuite l'étape 2012.

Dans l'étape 2012, le noyau informatique regarde dans la chaîne de variables binaires s'il existe une variable binaire non nulle après celle qui a conduit à l'activation précédente de l'étape 2006. S'il existe une variable binaire non nulle, le noyau informatique active l'étape 2006 pour la nouvelle variable binaire non nulle détectée en étape 2012. S'il n'existe pas de variable binaire non nulle, le noyau informatique active une étape 2009.

Dans l'étape 2009, le noyau informatique regarde si la chaîne de variables binaires ne contient que des valeurs nulles. Si la chaîne de variables binaires ne contient que des valeurs nulles, le noyau informatique active l'étape 2010. Sinon, c'est à dire si la chaîne de variables binaires contient au moins une valeur non nulle, le noyau informatique active une étape 2011.

Dans l'étape 2010, le noyau informatique marque un état de connexion classifiée dans la première structure de donnée puis active l'étape 2011.

Dans l'étape 2011, le noyau informatique met à jour la connexion paire en complétant la première structure de donnée associée à la connexion paire avec la suite ordonnée de noms de protocoles utilisés et la chaîne de variables binaires contenues dans la première structure de données associée à la connexion courante. Le noyau informatique termine alors l'étape 1004.

Après l'étape 1004, le noyau informatique active l'étape 1006 maintenant décrite en référence à la figure 2.

Dans l'étape 1006, le noyau informatique considère successivement un nom de protocole de la suite ordonnée de noms de protocoles utilisés en commençant par le nom de protocole qui suit le nom Base. Le noyau informatique regarde dans la colonne 104 si le nom de protocole considéré correspond à un protocole générateur de connexion dynamique. Si le nom de protocole considéré ne correspond pas à un protocole générateur de connexion dynamique, le noyau informatique active une étape 1010. Si le nom de protocole considéré correspond à un protocole générateur de connexion dynamique, le noyau informatique active une étape 1008.

Dans l'étape 1008, le noyau informatique soumet le paquet de données au mécanisme auto-identificateur associé au nom de protocole considéré pour demander au mécanisme auto-identificateur s'il détecte qu'une connexion dynamique est générée dans le paquet de données soumis et si oui de retourner les noms de protocoles prévus et les identificateurs source et destination de la connexion dynamique qui est générée. Si le mécanisme auto-identificateur retourne des noms de protocoles prévus et des identificateurs source et destination pour une connexion dynamique, le noyau informatique active une étape 1009. Sinon, c'est à dire si le mécanisme auto-identificateur répond qu'il ne détecte aucune génération de connexion dynamique, le noyau informatique active l'étape 1010.

Dans l'étape 1009, le noyau informatique ajoute dans la deuxième table associative 2, une deuxième structure de données, associée à une connexion future en utilisant la première structure de donnée associée à la connexion courante et en utilisant la réponse retournée par le mécanisme auto-identificateur en étape 1008.

Dans l'étape 1010, le noyau informatique regarde s'il existe un nom de protocole suivant dans la suite ordonnée de noms de protocoles utilisés. S'il existe un nom de protocole suivant dans la suite ordonnée de noms de protocoles utilisés, le noyau informatique réactive l'étape 1006 pour ce nom de protocole suivant. Sinon, c'est à dire s'il n'existe pas de nom de protocole suivant dans la suite ordonnée de noms de protocoles utilisés, le noyau informatique éjecte le paquet reçu en étape 1000 pour que ce paquet poursuive son chemin jusqu'à sa destination suivante.

Le procédé qui vient d'être décrit, est réitéré pour chaque réception de paquet en étape 1000.

## Revendications

1. Procédé pour classifier au moyen d'un système informatique, des connexions détectées entre émetteurs et récepteurs dans des réseaux de communication qui utilisent une pile de protocoles nommés chacun par un nom de protocole utilisable, un protocole de la pile étant dit explicite lorsqu'il est identifiable de façon certaine par une en-tête de protocole qui le précède dans la pile protocolaire et un protocole étant dit implicite autrement, le procédé comprenant, dans le système informatique:
- associer, à chaque nom de protocole, implicite ou explicite, utilisable, un mécanisme auto-identificateur de protocole agencé pour reconnaître des informations déterminantes du protocole nommé par ce nom, parmi des informations véhiculées dans une connexion détectée,
- associer, à chaque nom de protocole utilisable dit protocole père, une liste vide ou non vide de noms de protocoles utilisables dits protocoles fils,
- à chaque connexion détectée, associer (1002, 1003), dans un noyau informatique une première structure de données agencée pour contenir une suite ordonnée de noms de protocoles utilisés qui est initialisée avec un nom de protocole dit de base,
- pour chaque connexion détectée, construire (1004) dans le noyau informatique la première structure de données en cherchant (2000) dans la liste de noms de protocole fils, associée au dernier nom de ladite suite ordonnée, en discriminant (2001), entre nom de protocole fils de nature implicite et nom de protocole fils de nature explicite, un nom de protocole fils pour lequel le mécanisme auto-identificateur associé reconnaît (2002, 2007) des informations déterminantes parmi les informations véhiculées puis en ajoutant (2003) à la fin de la suite ordonnée, le nom de protocole fils lorsqu'il est trouvé et en recommençant à chercher tant qu'il est possible de trouver (2009) dans la liste de noms de protocole fils, associée au dernier nom de ladite suite ordonnée, un nom de protocole fils pour lequel le mécanisme auto-identificateur associé reconnaît des informations déterminantes parmi les informations véhiculées,
- déclarer (2010) classifiée la connexion détectée dans le noyau informatique lorsqu'il n'est plus possible de trouver dans la liste de noms de protocole fils, associée au dernier nom de ladite suite ordonnée, un nom de protocole fils pour lequel le mécanisme auto-identificateur associé reconnaît des informations déterminantes parmi les informations véhiculées,
dans lequel, pour chercher un nom de protocole fils de nature implicite, le noyau informatique soumet (2006) l'information véhiculée, à chaque mécanisme auto-identificateur associé à un nom de la liste de noms de protocoles fils jusqu'à ce que l'un des mécanismes auto-identificateur déclare (2007) reconnaître des informations déterminantes à partir de règles de langage du protocole fils ou jusqu'à ce qu'aucun mécanisme auto-identificateur ne puisse déclarer reconnaître (2012) des informations déterminantes,
et dans lequel, pour chercher un nom de protocole fils de nature explicite, le noyau informatique soumet (2002) l'information véhiculée au mécanisme auto-identificateur associé au dernier nom de ladite suite ordonnée, de façon à ce que ce mécanisme auto-identificateur trouve le nom du protocole fils parmi les informations déterminantes du protocole père.

2. Procédé pour classifier des connexions selon la revendication 1, **caractérisé en ce que** le noyau informatique élabore (1001) une signature courante pour chaque connexion détectée, l'élaboration de la signature courante comprenant la soumission de tout ou partie de l'information véhiculée à au moins un mécanisme auto-identificateur associé à l'un des noms de rang faible dans ladite suite ordonnée, de façon à ce que ce mécanisme auto-identificateur trouve des indicateurs de source et de destination parmi les informations déterminantes, ladite signature courante étant élaborée par le noyau informatique de façon à contenir lesdits indicateurs de source et de destination.

3. Procédé pour classifier des connexions selon la revendication 1, **caractérisé en ce que** le noyau informatique répertorie chaque première structure de données dans une première table (1) en établissant une première correspondance associative entre chaque première structure de données et la signature courante élaborée (1001) pour la connexion associée.

4. Procédé pour classifier des connexions selon la revendication 3, **caractérisé en ce que** le noyau informatique établit (1003, 2011) dans ladite première table (1) une deuxième correspondance associative entre chaque signature courante et une signature paire dont les indicateurs de source sont les indicateurs de destination de la signature courante et dont les indicateurs de destination sont les indicateurs de source de la signature courante.

5. Procédé pour classifier des connexions selon l'une des revendications 3 ou 4, **caractérisé en ce que**:
- le noyau informatique récolte (1000) dans des paquets de données passant par le système informatique au sein de connexions à détecter, les informations véhiculées utiles pour élaborer une signature de façon à élaborer (1001) la signature courante chaque fois que les informations véhiculées utiles sont suffisantes,
- le noyau informatique utilise la signature courante ainsi élaborée en temps réel pour détecter une connexion, de façon à chercher (1002) dans ladite première table (1), la première structure de données qui correspond à la signature courante, à associer (1003) une nouvelle première structure de données à la connexion détectée lorsqu'il n'existe aucune première structure de données qui correspond à la signature courante et à commencer ou continuer (2000) à construire la première structure de données lorsqu'il existe une première structure de données qui correspond (1002) à la signature courante, en récoltant (1000) dans les paquets de données, les informations véhiculées utiles pour construire de première structure de données.

6. Procédé pour classifier des connexions selon la revendication 5, **caractérisé en ce que**, lorsque les informations utiles récoltées dans un paquet de données ne sont pas suffisantes pour élaborer une signature, le noyau informatique répertorie les informations utiles dans une deuxième table en établissant une correspondance associative entre les informations utiles qui comprennent alors des liens d'appartenance à une même connexion, jusqu'à ce que les informations utiles soient suffisantes pour élaborer la signature courante.

7. Procédé pour classifier des connexions selon lune des revendications précédentes, **caractérisé en ce que**:
- le noyau informatique parcourt (1006) les noms de protocoles utilisés de la suite ordonnée dans la structure de donnée qu'il construit pour détecter (1007) chaque nom de protocole à connexion dynamique,
- pour chaque nom de protocole à connexion dynamique détecté, le noyau informatique soumet (1008) les informations véhiculées au mécanisme auto-identificateur associé au nom détecté de façon à déterminer s'il existe une connexion dynamique ultérieure et si une connexion ultérieure existe, à lui associer (1009) une deuxième structure de données agencée pour contenir une suite ordonnée de noms de protocoles potentiels qui débute avec le nom de protocole dit de base.

8. Procédé pour classifier des connexions selon les revendications 3 et 7, **caractérisé en ce que** le noyau informatique répertorie (1009) chaque deuxième structure de données dans une deuxième table (2) en établissant une correspondance associative entre chaque deuxième structure de données et une signature potentielle élaborée par le mécanisme auto-identificateur associé au nom détecté.

9. Procédé pour classifier des connexions selon la revendication 8, **caractérisé en ce que** le noyau informatique construit en outre la première structure de données:
- en cherchant (2004) les suites ordonnées de noms de protocoles potentiels dans lesquelles est incluse la suite ordonnée de noms de protocoles utilisés et,
- lorsqu'il existe (2005) une suite ordonnée de noms de protocoles potentiels dont la signature potentielle correspond à la signature courante, en complétant (2003) la première structure de données au moyen de la deuxième structure de donnée.

## Claims

1. Method operated by a computer system for classifying connections detected between transmitters and receivers in communication networks which use a stack of protocols, each designated by a usable protocol name, a protocol in the stack being deemed explicit if it is unambiguously identifiable by a protocol header preceding it in the protocol stack and a protocol being deemed implicit otherwise, which method comprises, in the computer system:
- associating with each usable protocol name, implicit or explicit, an automatic protocol identifier mechanism configured to recognise determinant information of the protocol designated by this name from among information conveyed in a detected connection,
- associating with each usable protocol name or so-called father protocol an empty or non-empty list of usable protocol names or so-called son protocols,
- in a computing kernel, associating (1002, 1003) with each detected connection a first data structure configured to contain an ordered sequence of used protocol names which is initialised with a so-called base protocol name,
- for each detected connection, building (1004) in the computing kernel the first data structure by searching (2000) through the list of son protocol names associated with the last name of said ordered sequence, whilst distinguishing (2001) between son protocol names of an implicit nature and son protocol names of an explicit nature, for the son protocol name for which the associated automatic identifier mechanism recognises (2002, 2007) determinant information among the conveyed information and then adding (2003) the son protocol name to the end of the ordered sequence once it is found, and restarting the search of the list of son protocol names associated with the last name in the ordered sequence for a son protocol name for which the associated automatic identifier mechanism recognises determinant information among the conveyed information,
- declaring (2010) the connection detected in the computing kernel classified if it is no longer possible to find in the list of son protocol names associated with the last name in said ordered sequence a son protocol name for which the associated automatic identifier mechanism recognises determinant information among the conveyed information,
where, in order to search for a son protocol name of an implicit nature, the computing kernel submits (2006) the conveyed information to each automatic identifier mechanism associated with a name in the list of son protocol names until one of the automatic identifier mechanisms declares (2007) having recognised determinant information on the basis of language rules of the son protocol or until no automatic identifier mechanism is able to declare having recognised (2012) determinant information,
and where, in order to search for a son protocol name of an explicit nature, the computing kernel submits (2002) the conveyed information to the automatic identifier mechanism associated with the last name in said ordered sequence so that this automatic identifier mechanism finds the name of the son protocol from among the determinant information of the father protocol.

2. Method of classifying connections as claimed in claim 1, **characterised in that** the computing kernel compiles (1001) a current signature for each detected connection, the process of compiling the current signature comprising submitting all or part of the conveyed information to at least one automatic identifier mechanism associated with one of the low-ranking names in said ordered sequence so that this automatic identifier mechanism finds source and destination indicators among the determinant information, said current signature being compiled by the computing kernel so that it contains said source and destination indicators.

3. Method of classifying connections as claimed in claim 1, **characterised in that** the computing kernel lists each first data structure in a first table (1) by establishing a first associative match between each first data structure and the current signature compiled (1001) for the associated connection.

4. Method of classifying connections as claimed in claim 3, **characterised in that** the computing kernel establishes (1003, 2011) in said first table (1) a second associative match between each current signature and a peer signature, the source indicators of which are the destination indicators of the current signature and the destination indicators of which are the source indicators of the current signature.

5. Method of classifying connections as claimed in one of claims 3 or 4, **characterised in that**:
the computing kernel collects (1000) useful conveyed information from data packets passing through the computer system within connections to be detected in order to compile (1001) a signature so that the current signature is compiled whenever there is sufficient conveyed useful information,
- the computing kernel uses the current signature thus compiled in real time to detect a connection in order to search (1002) through said first table (1) for the first data structure corresponding to the current signature, associate (1003) a new first data structure with the detected connection if no first data structure corresponding to the current signature exists, and start or continue (2000) building the first data structure if a first data structure corresponding (1002) to the current signature exists by collecting (1000) the conveyed useful information from the data packets in order to build a first data structure.

6. Method of classifying connections as claimed in claim 5, **characterised in that**, if the useful information collected from a data packet is not sufficient to compile a signature, the computing kernel lists the useful information in a second table by establishing an associative match between the items of useful information so that it then contains membership links to a same connection until the useful information is sufficient to compile the current signature.

7. Method of classifying connections as claimed in one of the preceding claims, **characterised in that**:
- the computing kernel reads (1006) the used protocol names of the ordered sequence in the data structure which it builds in order to detect (1007) each dynamic connection protocol name,
- for each dynamic connection protocol name detected, the computing kernel submits (1008) the conveyed information to the automatic identifier mechanism associated with the detected name in order to ascertain whether a subsequent dynamic connection exists, and if a subsequent connection exists, associate with it (1009) an ordered sequence of potential protocol names which start with the so-called base protocol name.

8. Method of classifying connections as claimed in claims 3 and 7, **characterised in that** the computing kernel lists (1009) each second data structure in a second table (2) by establishing an associative match between each second data structure and a potential signature compiled by the automatic identifier mechanism associated with the detected name.

9. Method of classifying connections as claimed in claim 8, **characterised in that** the computing kernel also builds the first data structure:
- by searching (2004) through the ordered sequences of potential protocol names which contain the ordered sequence of used protocol names, and
- if an ordered sequence of potential protocol names whose potential signature corresponds to the current signature exists (2005), by completing (2003) the first data structure by means of the second data structure.

## Patentansprüche

1. Verfahren zur Klassifizierung mittels eines Informatiksystems der Verbindungen, die zwischen Sendern und Empfängern in Kommunikationsnetzen erfasst werden, die einen Stack von Protokollen verwenden, die jeweils mit einem verwendbaren Protokollnamen benannt sind, wobei ein Protokoll des Stacks explizit genannt wird, wenn er sicher von einer Kopfzeile des Protokolls identifizierbar ist, die ihm in dem Protokoll-Stack vorangestellt ist, und wobei ein Protokoll andernfalls implizit genannt wird, wobei das Verfahren in dem Informatiksystem folgendes umfasst:
- zu jedem verwendbaren Namen eines impliziten oder expliziten Protokolls Zuordnen eines Autoidentifikationsmechanismus eines Protokolls, der derart vorgesehen ist, dass er bestimmende Informationen des mit diesem Namen benannten Protokolls unter Informationen, die in einer erfassten Verbindung transportiert werden, erkennt,
- zu jedem verwendbaren Protokollnamen, Mutterprotokoll genannt, Zuordnen einer leeren oder nicht leeren Liste von verwendbaren Protokollnamen, Töchterprotokolle genannt,
- zu jeder erfassten Verbindung Zuordnen (1002, 1003) einer ersten Datenstruktur in einem Informatikkern, die derart vorgesehen ist, dass sie eine geordnete Folge von verwendeten Protokollnamen enthält, wobei sie mit einem so genannten Basisprotokollnamen initialisiert wird,
- für jede erfasste Verbindung Erstellen (1004) der ersten Datenstruktur in dem Informatikkern, wobei in der Liste von Töchterprotokollnamen, die dem letzten Namen der geordneten Folge zugeordnet ist, wobei zwischen Töchterprotokollnamen impliziter Natur und Töchterprotokollnamen expliziter Natur unterschieden wird (2001), ein Töchterprotokollname gesucht wird (2000), für den der zugehörige Autoidentifikationsmechanismus bestimmende Informationen unter den transportierten Informationen erkannt (2002, 2007), wobei sodann am Ende der geordneten Folge der Töchterprotokollname hinzugefügt wird (2003), wenn er gefunden wird, und wobei wieder mit der Suche begonnen wird, solange es möglich ist, in der Liste von Töchterprotokollnamen, die dem letzten Namen der geordneten Folge zugeordnet ist, einen Töchterprotokollnamen zu finden (2009), für den der zugehörige Autoidentifikationsmechanismus bestimmende Informationen unter den transportierten Informationen erkennt,
- Erklären (2010) der in dem Informatikkern erfassten Verbindung für klassifiziert, wenn es nicht mehr möglich ist, in der Liste von Töchterprotokollnamen, die dem letzten Namen der geordneten Folge zugeordnet ist, einen Töchterprotokollnamen zu finden, für den der zugehörige Autoidentifikationsmechanismus bestimmende Informationen unter den transportierten Informationen erkennt,
bei dem für die Suche eines Töchterprotokollnamens impliziter Natur der Informatikkern die transportierte Information jedem Autoidentifikationsmechanismus unterzieht (2006), der einem Namen der Liste von Töchterprotokollnamen zugeordnet ist, bis einer der Autoidentifikationsmechanismen erklärt (2007), dass er bestimmende Informationen aus Sprachregeln des Töchterprotokolls erkennt, oder bis kein Autoidentifikationsmechanismus erklären kann, dass er bestimmende Informationen erkennt (2012),
und bei dem für die Suche eines Töchterprotokollnamens expliziter Natur der Informatikkern die transportierte Information dem Autoidentifikationsmechanismus unterzieht (2002), der dem letzten Namen der geordneten Folge zugeordnet ist, so dass dieser Autoidentifikationsmechanismus den Namen des Töchterprotokolls unter den bestimmenden Informationen des Mutterprotokolls findet.

2. Verfahren zur Klassifizierung von Verbindungen nach Anspruch 1, **dadurch gekennzeichnet, dass** der Informatikkern eine laufende Signatur für jede erfasste Verbindung ausarbeitet (1001), wobei die Ausarbeitung der laufenden Signatur das Unterziehen der Gesamtheit oder eines Teils der transportierten Information mindestens einem Autoidentifikationsmechanismus umfasst, der einem der Namen von geringerem Rang in der geordneten Folge zugeordnet ist, so dass dieser Autoidentifikationsmechanismus Indikatoren zur Quelle und zur Bestimmung unter den bestimmenden Informationen findet, wobei die laufende Signatur vom Informatikkern derart ausgearbeitet wird, dass sie die Quellen- und Bestimmungsindikatoren enthält.

3. Verfahren zur Klassifizierung von Verbindungen nach Anspruch 1, **dadurch gekennzeichnet, dass** der Informatikkern jede erste Datenstruktur in einer ersten Tabelle (1) repertorisiert, wobei er eine erste assoziative Entsprechung zwischen jeder ersten Datenstruktur und der für die zugehörige Verbindung ausgearbeitete laufende Signatur (1001) erstellt.

4. Verfahren zur Klassifizierung von Verbindungen nach Anspruch 3, **dadurch gekennzeichnet, dass** der Informatikkern in der ersten Tabelle (1) eine zweite assoziative Entsprechung zwischen jeder laufenden Signatur und einer Paarsignatur erstellt (1003, 2011), deren Quellenindikatoren die Bestimmungsindikatoren der laufenden Struktur sind, und deren Bestimmungsindikatoren die Quellenindikatoren der laufenden Signatur sind.

5. Verfahren zur Klassifizierung von Verbindungen nach einem der Ansprüche 3 oder 4, **dadurch gekennzeichnet, dass**
- der Informatikkern in Datenpaketen, die das Informatiksystem innerhalb von zu erfassenden Verbindungen durchlaufen, die nützlichen transportierten Informationen sammelt (1000), um eine Signatur auszuarbeiten, um die laufende Signatur immer dann auszuarbeiten (1001), wenn die nützlichen transportierten Informationen ausreichend sind,
- der Informatikkern die laufende Signatur, wie in Echtzeit ausgearbeitet, verwendet, um eine Verbindung zu erfassen, um in der ersten Tabelle (1) die erste Datenstruktur zu suchen (1002), die der laufenden Signatur entspricht, eine neue erste Datenstruktur der erfassten Verbindung zuzuordnen (1003), wenn keine erste Datenstruktur vorhanden ist, die der laufenden Signatur entspricht, und mit der Erstellung der ersten Datenstruktur zu beginnen oder fortzufahren (2000), wenn eine erste Datenstruktur vorhanden ist, die der laufenden Signatur entspricht (1002), wobei in den Datenpaketen die nützlichen transportierten Informationen gesammelt werden (1000), um eine erste Datenstruktur zu erstellen.

6. Verfahren zur Klassifizierung von Verbindungen nach Anspruch 5, **dadurch gekennzeichnet, dass**, wenn die in einem Datenpaket gesammelten nützlichen Informationen nicht ausreichend sind, um eine Signatur auszuarbeiten, der Informatikkern die nützlichen Informationen in einer zweiten Tabelle repertorisiert, wobei eine assoziative Entsprechung zwischen den nützlichen Informationen, die nun Zugehörigkeitsbande zu einer selben Verbindung umfassen, erstellt wird, bis die nützlichen Informationen ausreichend sind, um die laufende Signatur auszuarbeiten.

7. Verfahren zur Klassifizierung von Verbindungen nach einem der vorhergehenden Ansprüche, **dadurch gekennzeichnet, dass**
- der Informatikkern die verwendeten Protokollnamen der geordneten Liste in der Datenstruktur, die er erstellt, durchläuft (1006), um jeden Protokollnamen mit dynamischer Verbindung zu erfassen (1007),
- für jeden erfassten Protokollnamen mit dynamischer Verbindung der Informatikkern die transportierten Informationen dem Autoidentifikationsmechanismus, der dem erfassten Namen zugeordnet ist, unterzieht (1008), um zu bestimmen, ob eine spätere dynamische Verbindung besteht, und ob eine spätere Verbindung besteht, und um ihr eine zweite Datenstruktur zuzuordnen (1009), die derart vorgesehen ist, dass sie eine geordnete Folge von potentiellen Protokollnamen enthält, die mit dem so genannten BasisProtokollnamen beginnt.

8. Verfahren zur Klassifizierung von Verbindungen nach den Ansprüchen 3 und 7, **dadurch gekennzeichnet, dass** der Informatikkern jede zweite Datenstruktur in einer zweiten Tabelle (2) repertorisiert (1009), wobei eine assoziative Entsprechung zwischen jeder zweiten Datenstruktur und einer potentiellen Signatur erstellt wird, die von dem dem erfassten Namen zugeordneten Autoidentifikationsmechanismus ausgearbeitet wird.

9. Verfahren zur Klassifizierung von Verbindungen nach Anspruch 8, **dadurch gekennzeichnet, dass** der Informatikkern ferner die erste Datenstruktur erstellt:
- wobei in den geordneten Folgen von potentiellen Protokollnamen, in die die geordnete Folge von verwendeten Protokollnamen integriert ist, gesucht wird, und
- wobei, wenn eine geordnete Folge von potentiellen Protokollnamen vorhanden ist (2005), deren potentielle Signatur der laufenden Signatur entspricht, die erste Datenstruktur mit Hilfe der zweiten Datenstruktur vervollständigt wird (2003).
